# EUROPEAN PATENT APPLICATION

(11) **EP 1 704 995 A1**
(43) Date of publication of application: **27.09.2006**
(21) Application number: 05257866.3
(22) Date of filing: 20.12.2005
(51) Int. Cl.: B32B 27/00, B32B 29/00, D21H 27/00, B44C 5/04

(54) **Thermofused reinforced decorative composite material with thermoplastic stiffener core**

(30) Priority: 22.03.2005 US 85122
(71) Applicant: Kemlite Company, Inc., Channahon, Illinois 60410 (US)
(72) Inventor: Barney, Robert A., Elwood, Illinois 60421 (US); Simmons, James K., Joliet, Illinois (US)
(74) Representative: Beresford, Keith Denis Lewis

(57) **Abstract**

A reinforced composite material 10 includes a decorative layer 14, a stiffener core 12, and, optionally, a backing layer 16, which are thermofused to each other. Also provided is a method for the production of such a material.

## Description

The present invention relates generally to construction materials and more particularly to a reinforced decorative composite material that includes a top layer of decorative material, such as a high-pressure laminate, but could also be made of other material(s), such as paper, film, wood, or metal, and a stiffener core, such as fiber-reinforced thermoplastic, and, if desired, a bottom or backing layer, such as paper, secured together, and to the manufacture of such a composite sandwich material.

High-pressure laminate ("HPL") materials have been manufactured and sold for many years, and are familiar to many from their widespread use in kitchens and areas requiring very durable and decorative surface attributes. Such laminates are typically made of layers of paper impregnated with resin, compressed in a press or the like and heated to produce the desired laminate. One layer of paper may have a decorative pattern that remains visible in the finished product. The exact types of paper and resins used, as well as the pressures, equipment and temperatures used, and the precise order of steps, are well-known to those in the art. Typically, five to seven layers of paper may be incorporated in such a laminate material. A great variety of products of this type is commercially available from the Formica Corporation, under the trademark Formica, owned by that company. Examples of techniques and materials used in the manufacture of such laminates can be found in U.S. Patent 5,558,906, signed on its face to Formica Technology Inc.

U.S. Patent 5,558,906 discloses wear-resistant decorative laminates having excellent scratch, mar, scrape and abrasion resistance, and methods of producing them. In particular, it discloses wear-resistant, decorative laminates employing a decorative sheet saturated with a melamine-formaldehyde resin coating incorporating abrasive materials. According to this document, conventional decorative laminates are made of two essential layers: a core layer and a surface layer. The core layer constitutes a bottom or supporting layer to which the other layer is bonded and consists of a plurality of cellulosic sheets generally made from a kraft paper impregnated with a laminating resin. The industrially-preferred laminating resin is a phenolic resin made from the reaction of phenols with formaldehyde.

Next to the core layer is a decorative layer which is generally an alpha cellulose pigmented paper containing a print, pattern design or solid color that has been impregnated with a melamine-formaldehyde resin. The cured melamine-formaldehyde resins are colorless and resistant to light. They are also resistant to a variety of solvents and stains; and their heat resistance makes them resistant to burning cigarettes, boiling water and hot vessels up to about 162°C (325°F).

When the decorative layer of the laminate is a printed pattern, it is covered with an overlay which is typically a high-quality alpha cellulose paper impregnated with a melamine-formaldehyde resin. This layer protects the decorative print from external abuse such as abrasive wear and tear, harsh chemicals, bums, spills and the like. It is primarily the melamine-formaldehyde resin which accounts for these protective properties. The alpha cellulose paper acts as a translucent carrier for the wafer-thin resin, imparts strength to the rather brittle resin, maintains a uniform resin thickness in the overlay by acting as a shim, and controls resin flow.

Abrasive materials can be employed in the overlay sheet or solid colored decorative sheet for improving the abrasion resistance of the laminate. However, these have been found to cause severe damage to the delicate, highly-polished or intricately-etched surfaces of the press plates that are used to consolidate the laminate.

To overcome this problem, U.S. Patent 5,558,906 proposes high-pressure decorative laminates having a coating which comprises a thermosetting resin; abrasion resistant particles, of a particle size and in a concentration sufficient to provide for abrasion resistance, a coupling agent in an amount dependent upon the concentration of the abrasion resistant particles; a thickening agent in an amount sufficient to suspend the abrasion resistant particles; and a lubricating agent in a concentration sufficient to impart scrape resistance to the decorative laminate.

The preferred embodiment of this high-pressure decorative laminate utilizes a coating comprising melamine-formaldehyde resin to which the following are added, in proportions by weight of wet resin: 1.6% w/w wet resin Al₂O₃ (alumina) grit particles having a particle size of at least 25 µm; 0.8% w/w wet resin Al₂O₃ (alumina) grit particles having a particle size of at least 3 µm; from about 0.3% w/w wet resin to about 1.2% w/w wet resin polyvinyl alcohol; 0.25% silane coupling agent based upon the amount of grit used; 0.075% w/w wet resin xanthan gum thickener; and 0.1 % polyethylene glycol distearate having a molecular weight of about 6000. The melamine-formaldehyde resin may also be modified with a plasticizer and/or an acid catalyst if a more flexible wear-resistant laminate is desired. The preferred catalyst is para-toluene sulfonic acid; however, any kind of acid such as magnesium bromide, hydrochloric acid, sulfuric acid or the like may be utilized as a catalyst.

The polyvinyl alcohol acts as an auxiliary slip agent: it imparts to the laminate resistance to marks from sliding objects (sometimes known as "scuff" resistance). The xanthan gum is an alginate thickener which suspends the grit particles and protects the plates used in the laminate production process from undue wear causing metal mar marks on light-colored laminates. The polyethylene glycol distearate is a lubricating agent which enhances surface slip and improves scrape resistance of the laminate.

The coating formulation may also contain a small amount (0.01-0.1% w/w wet resin) of a surfactant designed to reduce surface tension of the coating to promote smooth and uniform coating deposition.

The resulting decorative laminate has excellent scratch resistance imparted by the 25 µm alumina grit. It also has excellent mar resistance imparted by the 3 µm alumina grit. The 3 µm alumina grit, being smaller, has much more surface area and thus provides more complete coverage of the laminate surface. However, the larger, 25 µm alumina grit particles are necessary to provide scratch resistance to the laminate. This is because mar is produced by many very small, closely spaced particles covering a broad area of the abrading object and, because of the broad coverage, pressure is very low. By contrast, a scratch is produced by a single larger hard, sharp object that is under greater pressure as a result of its small contact area with the laminate surface.

One process for producing such decorative laminates comprises the steps of:
preparing a mixture of (A) a liquid thermosetting, impregnating resin and (B) an abrasion resistant material comprising:
   (1) a first amount of abrasion resistant mineral particles having an average particle size of about 3 µm and a second amount of abrasion resistant mineral particles having an average particle size of about 25 µm, both of which are present in a concentration sufficient to provide for abrasion resistance, the weight ratio of the larger particles to the smaller particles being 2 to 1;
   (2) a coupling agent;
   (3) a thickening agent in an amount sufficient to suspend said abrasion resistant mineral particles; and
   (4) lubricating agents in a concentration sufficient to provide for scrape resistance;
      simultaneously coating and impregnating a decorative paper sheet with said abrasion resistant mineral particles and said thermosetting resin by uniformly coating said decorative sheet with said mixture, such that about 80% of the amount of thermosetting resin required for saturation of the decorative sheet is impregnated into it;
      dipping the resin impregnated decorative sheet into an identically formulated mixture of thermosetting resin and abrasion resistant material, such that the remaining amount of thermosetting resin required for saturation of the decorative sheet is impregnated into said resin impregnated decorative sheet;
      metering the total amount of thermosetting resin impregnated into the decorative sheet by metering means; and
      drying and consolidating said resin impregnated decorative sheet using conventional heat and pressure laminating techniques, thereby obtaining a decorative laminate having improved scratch, mar, scrape and abrasion resistance.

As mentioned above, HPL products are generally brittle and must be mounted on a layer of wood or other material of sufficient strength and rigidity, for use in the kitchen, and on any horizontal surface. Vertical surface applications of HPLs can be enhanced by a pre-laminated panel with the HPL as the outward side. A primary application of such a panel will likely be vertical wall surfaces, where drywall is a common substrate.

It is desirable to be able to use HPL products in environments where the product will be exposed to relatively high levels of wear and tear, moisture, and mechanical loads, without the need to mount the HPL on a mechanically strong layer of wood or other materials. For example, it would be desirable to be able to use decorative materials like HPL products in vertical wall applications in schools, hospitals, restaurants and other public areas that are subject to large amounts of traffic, and where conventional HPL cannot easily be used.

Also known are sheets of plastic reinforced with fiberglass, which have long been employed as surfaces that are resistant to abuse, such as tearing, and resistant to moisture. Such products are obtainable commercially, for example, from Kemlite Company, and some techniques and materials for use in their manufacture are disclosed in U.S. Patent Nos. 4,278,491, 4,110,151, 4,098,630 and 4,048,887. Thus far, FRP products typically have an embossed surface, are a solid color (usually white), and have a hard and shiny appearance that makes them unsuitable for uses where aesthetic appearance is important.

U.S. Patent Application Publication No. 2003/0157850 A1, discloses that one of the solutions for overcoming the above problems with regard to HPL panels and as an alternative to FRP products is to use a reinforced composite material that includes a laminate panel, a strengthening panel that has a reinforcement embedded therein, and a layer of adhesive disposed between the laminate panel and the strengthening panel to adhere the laminate panel and the strengthening panel together. The reinforcement in the strengthening panel may be fiberglass fibers, randomly oriented, or it may be provided in the form of a mesh or the like. In either case, the strengthening panel is made with a thermoset type resin (preferably a plastic (polymeric) material of the type known as fiberglass reinforced polyester).

This document also discloses a method for the production of such materials, in which there are provided a laminate panel of a type made by heating and compressing at least a first layer of paper and quantity of resin, and a strengthening panel of a type made by embedding a reinforcement in a layer of a binder material. Then, the laminate panel is adhered to the strengthening panel with a layer of adhesive. The adhesive may preferably be a contact cement or a hot melt adhesive.

One embodiment of the reinforced composite material disclosed in U.S. Patent Application Publication No. 2003/0157850 A1 is a reinforced composite material having three layers. Two outer layers sandwich, and are secured together by, a third layer of adhesive. One of the outer layers is a HPL material which may be of a type available from the Formica Company, and the other outer layer is a sheet or panel of a reinforced material which may be a FRP material of a type available from Kemlite Company. The choice of adhesive is not critical and many commercially-availability since unsuitable for adhering combinations of HPL and FRP materials in this fashion. The key requirement for the adhesive is to provide the bonding qualities necessary to bond securely with the particular HPL and FRP materials selected in given circumstances.

As an alternative to the FRP material used for the reinforcing sheet, it is also possible to use other types of reinforced plastic. For example, a plastic sheet having reinforcing material in the form of a mesh, rather than in the form of randomly-oriented fiberglass, as in FRP, may alternatively be used. In addition, both types of reinforcement may be used together.

One method of forming a reinforced composite material of the above type comprises the steps of:
providing a laminate panel by heating and compressing at least a first layer of paper and quantity of resin;
providing a strengthening panel by embedding a reinforcement in a layer of a binding material; and
adhering the laminate panel to the strengthening panel with a layer of adhesive.

U.S. Patent Application Publication No. 2005/0186399 A1 discloses an alternative structure. Specifically, it discloses a reinforced composite material which combines a decorative layer, a strengthening panel that includes a reinforcement embedded therein, and a suitable means of securing the decorative layer and the strengthening panel together permanently. This securing function is achieved by a direct thermal fusion (or thermofusion) of the decorative layer and the strengthening panel to each other, although one or more additional materials may also be present between the decorative layer and the strengthening panel. The reinforcement in the strengthening panel may be fiberglass fibers, randomly oriented, or which may be provided in the form of a mesh or the like. In either case, the strengthening panel is preferably a plastic (polymeric) material of the type known as fiberglass reinforced polyester.

The thicknesses of the layers may be selected according to need but, as an example, the decorative layer may be made from a single layer of paper impregnated with resin with a which is fused with the strengthening panel at a temperature and pressure sufficient to result in the permanent fusion of the layer of paper to the strengthening panel. Greater numbers of layers of paper may be used, the outermost one of which may have a decorative pattern on the side facing away from the FRP inward to be visible in the finished product.

Nonetheless, while the above-mentioned applications solve prior art problems, there is still a need to provide greater improvements. For example, the composite material disclosed in U.S. Patent Application Publication No. 2003/0157850 A1 requires an adhesive to combine the decorative layer and the strengthening panel. While U.S. Patent Application Publication No. 2005/0186399 A1 eliminates the need for an adhesive material, direct fusion of two different types of polymers requires the application of high-pressure. Also, in both of these documents, an additional process step would be required to achieve any possibility of providing the back of the selected strengthening panel with a different functionality.

Accordingly, one embodiment of the present invention seeks to provide a material that will have the aesthetic qualities of HPL, which can be easily installed on vertical surfaces, and which is less expensive to manufacture, more versatile, or both, and the materials disclosed in the two previously-mentioned U.S. Patent Application Publications, Nos. 2003/0157850 A1 and 2005/0186399 A1. It is also an object to provide such a material that will have sufficient mechanical strength for use in situations where conventional HPL products might not otherwise be usable, such as wall panel applications, without a substantial structural substrate.

The present invention provides a panel that is installer-friendly and combines the custom colors/pattern flexibility of decorative paper or an HPL face with a waterproof, dimensionally stable, user-friendly core and optionally a bottom or backing layer for enhanced adhesion to glues used to install the panel. Further, this composite panel enhances the impact resistance and moisture resistance of known available decorative vertical wall panels. The subject panel will allow installation of an HPL vertical surface in a most expeditious manner saving labor costs in drywall preparation, and actual installation time of the panel, when compared to applying HPL on a drywall, which is usually accomplished by first mounting the HPL on thick wood.

One embodiment of the present invention is a reinforced composite material that comprises a decorative layer and a stiffener core that includes a reinforcement embedded therein, which are fused together by thermoplastic in the core. The stiffener core may include a reinforced thermoplastic layer and, if desired, various layers of a wide range of stiffening materials. Preferably, the reinforcement in the stiffener core matrix comprises, but is not limited to, various lengths of fiberglass fibers, continuous fiberglass mat, spun blown fiberglass fibers randomly oriented, or oriented in layers at different angles. The reinforcement may also be provided in the form of a woven reinforcement or the like. Moreover, the reinforcement, if continuous, can be either continuous-strand (i.e., random), or oriented in various directions, such as in layers oriented in different directions. The reinforcement may also be provided in the form of a woven or continuous and/or discontinuous (which again could be oriented or random) reinforcement or the like. Other types of reinforcement fibers might include, but are not limited to, various forms of carbon fiber, aramid fiber, and polyamide fiber. In either case, the stiffener core comprises a thermoplastic material such that the decorative layer can be thermally fused to the stiffener core via the thermoplastic fusing action of heating and subsequently cooling the stiffener core in the presence of the decorative layer.

The decorative layer is contemplated to be aesthetically acceptable, as it is typically visible in the final composite product.

Another embodiment of the present invention is a composite material, which includes a bottom or backing layer that is thermally fused to the stiffening core on the opposite side to the decorative layer. The presence of the bottom or backing layer improves the ability of the composite to be applied to various surfaces.

The thicknesses of the layers may be selected according to need but, as examples, the decorative layer may be made from, typically, one layer of paper, or any decorative layer material (although greater numbers of layers are within the scope of the invention), idly impregnated with resin or not and fused with the stiffener core and, if desired, with an optional backing layer by treatment at a temperature and pressure for a sufficiently long period of time to result in the permanent fusion of the various component layers. The stiffener core may, for example, be 0.76, 1.52 or 2.29 mm (0.030, 0.060 or 0.90 inches) thick, although the invention is not limited to these specific numbers of layer combinations and thicknesses.

One aspect of the present invention involves reducing the weight of the reinforced composite material, by using a small number of sheets or layers of paper in the decorative layer, for example, preferably one, rather than the much larger numbers typically used in existing HPL products (often five to seven layers).

The present invention also provides a method for the production of such a material, in which there are provided a decorative layer, a stiffener core having any embedded reinforcement therein and, if desired, an optional backing layer. Then, the decorative layer and the backing layer, if present, are permanently secured to the stiffener core by direct thermoplastic fusion, which is effected by heating the decorative layer, the stiffener core, and, if provided, the bottom or backing layer, while subjecting them to pressure. In the absence of the backing layer, the decorative layer may be fused with the stiffener core in the same manner.

These and other objects, features and advantages of the present invention will be more fully apparent from a consideration of the following detailed description of the preferred embodiments, taken in conjunction with the accompanying drawings. In the drawings:
Figure 1 is a view of a preferred embodiment of a composite material according to the present invention;
Figures 2A and 2B are details showing two varieties of fiber reinforced thermoplastic that may be used in the embodiment shown in Figure 1, and
Figure 3 is a schematic illustration of a method according to the present invention.

One of the most important features of the present invention is that the stiffener core contains a thermoplastic material, which allows this panel to be thermoplastically fused with a decorative layer and, if desired, a bottom or backing layer on its opposite face from the decorative layer, without the need for an adhesive component or increased pressure due to the thermoplastic properties of the stiffener core.

Prior reinforced decorative composite material panels, such as those disclosed in U.S. Patent Application Publications, Nos. 2003/0157850 A1 and 2005/0186399 A1, use a fiber reinforced thermoset (e.g., polyester) substrate. Thermoset plastics, once their molecules are "cured" or "cross-linked", are not able to be melted and/or reformed, nor can they adhere to other materials in and by themselves.

The present invention uses a reinforced thermoplastic material (e.g., fiber reinforced polypropylene). Thermoplastic molecules are lined up side by side. When heated, they become active and spread apart (melt, or the thermoplastic "flows"). When cooled, they closed up together once again and become firm. It is during this thermoplastic "flow" process that the plastic will mechanically stick to another surface when it is subsequently cooled when held in proximity to that surface.

The thermoplastic portion of the reinforced thermoplastic melts at various temperatures, depending on the type of thermoplastic used. For example, polypropylene begins to melt at around 160-170°C. The melted thermoplastic, under low pressure in order to hold it in proximity to other surfaces, flows to the back side of the decorative surface material and the surface and to both sides of any material inserted into the middle of the composite or on the back of the composite. At the same time, the melted plastic layers are fused together in a matter of minutes, forming, either alone or in conjunction with other materials inserted into, or on either side of, the composite, a stiffener core. When the thermoplastic is cooled, a product is formed in which all of the materials of the composite are physically fused together.

A decorative wall panel can be made by using a decorative finish like that of an HPL, or any decorative finish in which that finish is thermofused with a reinforced thermoplastic stiffener core comprised of (i) at least one layer of reinforced thermoplastic fused together in the process and/or (ii) a combination of reinforced thermoplastic layer(s) with various layers of a wide range of stiffening materials, such as, but not limited to, structural and flexible thermoplastic or thermoset open or closed cell foam, various plastic or metal honeycomb structures, sheet metal or wood, by applying heat and pressure to the combination of the various materials in a continuous low pressure press to cause the thermoplastic to melt (flow). More than one thermoplastic layer may be included when forming the stiffener core. The additional layers are not necessarily reinforced. Also, the thermoplastic materials in the different layers may differ from each other.

During the thermoplastic "flow", the plastic comes in contact with the various surfaces and wets out the surfaces. The materials on the panel are integrated by co-mingling with the melted plastic. The additional various materials can improve the functionality of the finished product, for example, by providing additional stiffness and/or insulation.

The interaction of the thermoplastic material with the decorative layer is not limited to any specific form, so long as thermofusion is achieved. For example, the decorative layer may be substantially or totally impregnated with the thermoplastic material. Alternatively, it is contemplated that this layer may be substantially or completely not impregnated with the thermoplastic material.

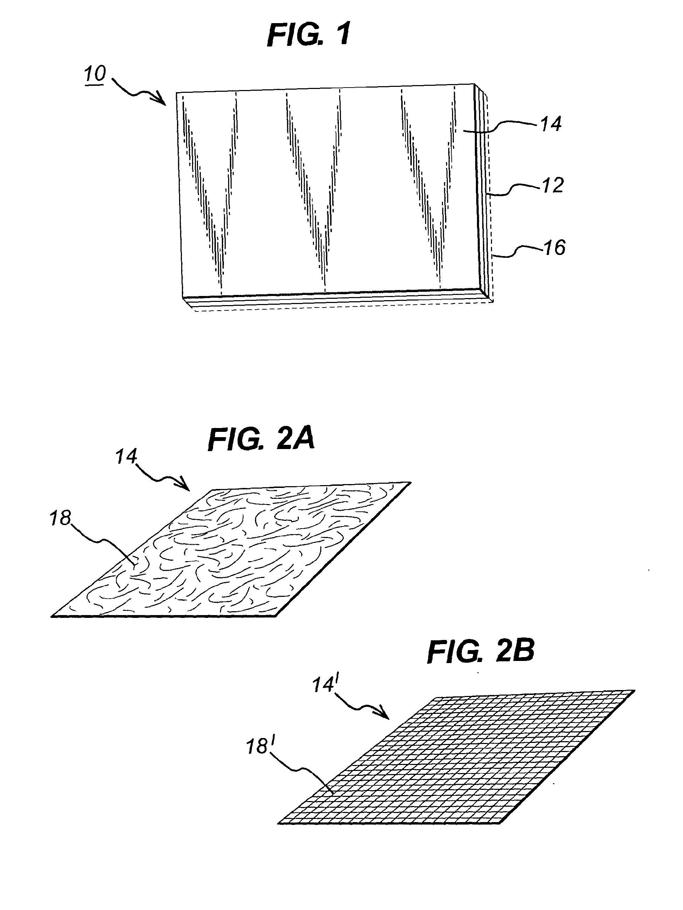

The first preferred embodiment of the present invention is a reinforced composite material 10 having three portions 12, 14 and 16, as shown in Fig. 1. Reference number 12 represents a decorative layer, reference number 14 represents a stiffener core, and reference number 16 represents a bottom or backing layer, shown in dotted outline in the Figure . The stiffener core 14 may be any thermoplastic material, while the decorative layer 12 may be made of one sheet, or a small number of sheets (typically, 2, 3, 4, 5, 6, 7, 8, 9, or 10, although an even greater number of layers can be used), of decorative paper or resin-impregnated paper and the bottom or backing layer 16 is untreated paper or a non-woven fiber scrim.

The types of paper that may be used in the decorative layer include all those types suitable for use in various laminates, and saturated papers typically used in thermo fusing operations. In general, one layer of paper may have a decorative pattern on the side facing away from the stiffener core, so as to be visible in the finished product.

Also, while any type of thermoplastic resin suitable for the purpose can be used as a stiffener core material within the scope of the invention, such as, for example, polyethylene, polyethylene terephthalate (PET), polyvinyl chloride (PVC), acrylonitrile-butadiene-styrene (ABS); a polypropylene resin is preferred. These materials can be reinforced with fiberglass, in the form of random chopped, woven, spun blown, or continuous direction fibers. For ease in forming the stiffener core, normally, one of these thermoplastic materials will be used. However, it is within the scope of the present invention to use a combination of two or more such materials.

While it is preferred to use a sheet of fiber reinforced thermoplastic material for the stiffener core, it is also possible to use other types of reinforced thermoplastics. The reinforcement may comprise continuous and/or discontinuous fibers. Moreover, the reinforcement, if continuous, can be either continuous-strand (i.e., random), or oriented in various directions, such as in layers oriented in different directions. The reinforcement may also be provided in the form of a woven or continuous and/or discontinuous (which again could be oriented or random) reinforcement or the like.

For example, a thermoplastic material 14' having reinforcing material in the form of a mesh or woven material 18', rather than in the form of randomly-oriented fiberglass material 18, as in fiber reinforced plastics, forms a second preferred embodiment of the invention. Figs. 2A and 2B indicate these two types of materials for use in the composite material shown in Fig. 1. In addition, if desired, both types of reinforcement may be used together.

Thermoplastics are most often olefin-based compounds and have little affinity to typical glues or other materials generally used for applying panels to wall surfaces. Therefore, a backing layer, such as paper or non-woven materials (fiberglass, polyester or a fiber scrim), can be applied to the underside of the combination to provide a panel back side that is receptive to typical adhesives used to apply the panels.

Alternatively, or in conjunction with the use of the backing layer to improve the affinity of the composite to other materials, a portion of the reinforcement may not be completely embedded in the thermoplastic material, protruding from the surface of the stiffener core that faces away from the decorative layer. Preferably, this protruding portion is not completely coated with the thermoplastic material. More preferably, this portion is substantially not coated with the thermoplastic material.

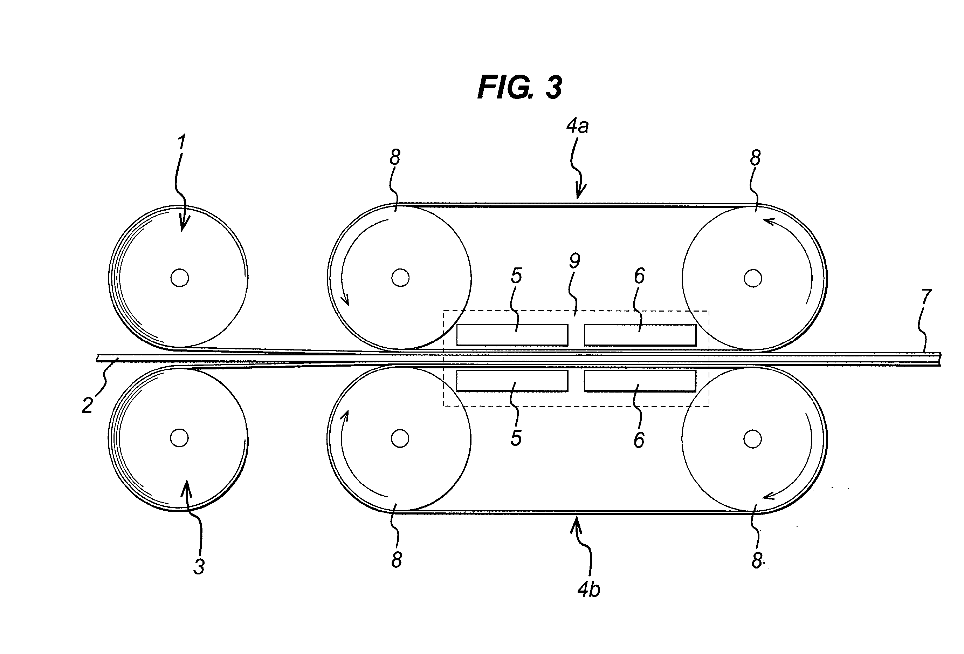

A preferred method of manufacturing the composite material shown in Fig. 1 is schematically illustrated in Fig. 3. The decorative finish 1, the stiffening core 2 and the backing material 3 are fed for consolidation. These components may be fed in either roll form or individual sheet or panel form. In an alternative embodiment, various combinations of functional material layers and thermoplastic stiffening layers can also be fed in this manner.

Preferably, the materials are fed to continuous belts 4a and 4b, which rotate in the machine direction via rollers 8 to convey the materials into the consolidation area 9. The conveyor belts 4a and 4b preferably also apply a constant low pressure to keep the layers of materials in contact with each other throughout the consolidation process. The belts feed the combination of materials to the heaters 5, which drive heat into the materials and melt (or flow) the thermoplastic. After the layers pass through the heaters 5, they are fed to chillers 6 to cool the thermoplastic back to a "solid" form, mechanically adhering the layers. Thus, the finished, layered consolidated product 7 is formed.

The thicknesses of the layers of the light-weight reinforced composite material may be selected according to need. For example, the decorative layer may be formed from one to three layers of paper, although more may be used if desired. The fewer that are used, however, the greater the benefit that will be obtained, as the smaller number of layers of paper will result in lower overall cost of the finished product. The stiffener substrate may be 0.76, 1.52 or 2.29 mm (0.030, 0.060 or 0.090 inches) thick. The selection of the thickness may depend on a number of factors; one will, of course, be ensuring that the resultant product complies with any applicable fire rating or other codes applicable to the intended use of the product. Nonetheless, the invention is not limited to these specific thicknesses and combinations of thicknesses.

Again, while it is contemplated to effect thermoplastic fusion of the saturated paper to the stiffener core and, if desired, a backing layer, it is contemplated within the broad scope of the invention to include one or more additional materials in contact with the decorative layer, the core, and/or the optional backing layer. Areas such materials include what are known as a gator ply and as a receptor coat (the latter might, for example, be used to compensate for irregularities of the stiffener core surface). Other materials, however, may also (or instead) be used without departing from the scope of the invention. Such materials may enhance the properties of the stiffener core, such as increase its insulation and stiffness properties.

These additional materials may be placed between the stiffener core and the decorative and/or backing layer, resulting in the stiffener core not being in contact with the decorative and/or backing layer along the entire surface of the core facing such layer. For example, glue may be applied to a part of the interface to enhance adhesion of the layers. Since the stiffener core is thermoplastic, the combination of all layers in accordance with the present invention can be conducted simultaneously. Alternatively, and depending upon the melt properties and the thermal conductivity of the stiffener core, one face of the stiffener core may be thermofused to the decorative layer in a separate operation from the thermofusion of the second face of the stiffener core to the bottom or backing layer.

The decorative layer in accordance with the present invention is contemplated to be aesthetically acceptable, because it is typically visible in the final product. This decorative layer, however, is not necessarily a printed or any other pattern. The decorative layer may be pre-assembled or even a commercially available material (e.g., high or low pressure laminate), which is then combined with the stiffener core and/or the optional backing layer to form the composite material of the present invention.

Typically, the manufactured composite is oversized after forming. Therefore, it is subjected to a post-forming trimming operation. Trimming may be performed by, for example, a shearing operation. Alternatively, or in addition, the trimming may be accomplished by water jetting in which water is jetted at about 310 MPa (about 45,000 psi). As an example, laminates up to about 25.4 mm (about 1 inch) in thickness may be cut in this way, though it will be understood by persons skilled in the art that the present invention is not limited to laminates of such a thickness. Among the advantages of water-jetting are that it leaves a clean edge, does not chip the laminate, does not disrupt the decorative pattern, and is noise and dust free.

While the present invention has been described in detail with reference to the currently-preferred embodiments, many modifications and variations of those embodiments will now be apparent to those skilled in the art. Accordingly, the scope of the invention is not to be limited by the details of the foregoing detailed description, but only by the terms of the claims which follow.

## Claims

1. A reinforced composite material (10) comprising:
a decorative layer (12);
a stiffener core (14) comprising a thermoplastic material and a reinforcement embedded therein; and, optionally
a backing layer (16) facing a surface of the stiffener opposite to that facing the decorative layer;
**characterised in that** the decorative layer and, if included, the backing layer are thermofused to the stiffener core.

2. The reinforced composite material according to claim 1, wherein the decorative layer comprises wood, metal, polymer film and/or resin-saturated paper.

3. The reinforced composite material according to claim 2, wherein the decorative layer comprises resin-saturated paper in which the resin is selected from the group consisting of a polyester resin and a melamine resin.

4. The reinforced composite material according to any preceding claim, wherein the thermoplastic material is selected from the group consisting of polypropylene, polyethylene, PET, PVC and ABS.

5. The reinforced composite material according to any preceding claim, wherein the reinforcement comprises fibers (18, 18').

6. The reinforced composite material according to claim 5, wherein the reinforcement comprises continuous and/or discontinuous fiberglass.

7. The reinforced composite material according to claim 6, wherein the reinforcement comprises continuous fiberglass and the continuous fiberglass is random or oriented.

8. The reinforced composite material according to claim 5, wherein the fibers comprise glass, aramid, polyamide and/or carbon fibers.

9. The reinforced composite material according to any one of claims 1 to 4, wherein the reinforcement comprises a woven material.

10. The reinforced composite material according to any preceding claim, wherein the stiffener core further comprises an additional thermoplastic material, stiffening material, and/or insulation material.

11. The reinforced composite material according to claim 10, wherein the stiffening material comprises foam, wood, metal and/or film.

12. The reinforced composite material according to claim 11, wherein the stiffening material comprises foam and the foam is thermoplastic or thermoset closed-or open-celled.

13. The reinforced composite material according to any preceding claim, wherein the backing layer comprises a fiber material.

14. The reinforced composite material according to claim 13, wherein the fiber material of the backing layer is paper or non-woven scrim.

15. The reinforced composite material according to any preceding claim, wherein a portion of the reinforcement protrudes from the surface of the stiffener substrate opposite to that facing the decorative layer.

16. The reinforced composite material according to claim 15, wherein the portion is at least partially not coated with the thermoplastic material.

17. A method for making a reinforced composite material (10), comprising the steps of:
providing a decorative layer (12) and a stiffener core (14), said stiffener core comprising a thermoplastic material and a reinforcement embedded therein, and, optionally, a backing layer (16);
**characterised by** thermofusing the stiffener substrate with the decorative layer and, if provided, the backing layer.

18. The method according to claim 17, wherein a backing layer is thermofused to the stiffener substrate in a separate step from the thermofusion of the stiffener substrate with the decorative layer.

19. The method according to claim 17 or 18, wherein the backing layer comprises a fiber material (18, 18').

20. The method according to claim 19, wherein the fiber material comprises paper or non-woven scrim.

21. The method according to any one of claims 17 to 20, wherein a stiffening material or an insulation material or both is provided in addition to the decorative layer, the stiffener substrate and the backing layer.

22. The method according to claim 21, wherein the stiffening material comprises foam, metal, polymer film and/or wood.

23. The method according to claim 22, wherein the stiffening material comprises foam and the foam is thermoplastic or thermoset open- or closed-cell.

24. The method according to any one of claims 17 to 23 further comprising the step of trimming the reinforced composite material after completion of the thermofusion step or steps.

25. The method according to claim 24 wherein the trimming step comprises a shearing operation.

26. The method according to claim 24 or 25 wherein the trimming step comprises cutting by water jetting.
